# EUROPEAN PATENT SPECIFICATION

(11) **EP 2 453 700 B1**
(45) Date of publication and mention of the grant of the patent: **21.05.2014**
(21) Application number: 10360043.3
(22) Date of filing: 10.11.2010
(51) Int. Cl.: H04W 36/00

(54) **Identifying neighbouring base stations**
Identifizierung benachbarter Basisstationen
Identification de stations de base voisines

(43) Date of publication of application: 16.05.2012
(73) Proprietor: Alcatel Lucent, 75007 Paris (FR)
(72) Inventor: Sapiano, Philip Charles, Corsham, Wiltshire SN13 9AY (GB); Bradley, Nigel L., Cricklade SN6 6LT (GB)
(74) Representative: Sarup, David Alexander

(56) References cited:
- EP-A1- 2 009 932
- US-B1- 6 285 874

## Description

### FIELD OF THE INVENTION

The present invention relates to a method of identifying neighbouring base stations, a network node and a computer program product.

### BACKGROUND

In a cellular wireless telecommunications system, radio coverage is provided by areas known as cells. A base station is located in each cell to provide the radio coverage area. Traditional base stations provide coverage in relatively large geographical areas and these cells are often referred to as macro cells. It is possible to provide smallersized cells, often within a macro cell. Such smaller-sized cells are sometimes referred to as micro cells, pico cells or femto cells. The term "femto cells" would be used to refer generally to all such small cells. Small cells are typically established by providing a small cell base station that provides radio coverage having a relatively limited range within the radio coverage area of a macro cell. The transmission power of the small cell base station is relatively low and, hence, each small cell provides a smaller coverage area compared with that of a macro cell and covers, for example, an office or a home. A group of such small cell base stations may together provide a wireless small cell network.

Such small cells are typically provided where the communications coverage provided by the macro cell is poor, or where a user wishes to use an alternative communications link provided locally by the small cell base station to communicate with the core network. Such a situation may arise where, for example, a user has a pre-existing communications link and the user wishes to utilise that link in preference to that provided by the macro network to communicate with the core network. The group of small cell base stations providing the wireless small cell network can together provide extended local coverage to user equipment throughout, for example, a home or an office building by using multiple small cell base stations distributed throughout those buildings which enables each of those base stations to transmit a lower power than would otherwise be necessary if coverage was provided by a single small cell base station.

US 6,285,874 B1 discloses techniques for cell identification. A candidate list is created for each cell. This candidate list is created based on a function of various elements. The cells are then ranked on the candidate list based on this function. When a particular frequency/code combination is detected, the candidate list for that cell is then consulted and the highest ranking cell with the same frequency/code combination is chosen as being the signal source in another embodiment, a cell's neighbour list is used to create the candidate list. If there are no matches on this candidate list for the detected frequency/code combination, then the neighbours of the cells on the candidate list are also added to the candidate list which is then checked for a match. EP 2 009 932 A1 discloses techniques for determining a missing adjacent cell.

However, the proliferation of the deployment of base stations and, in particular, small cell base stations increases the complexity of handover of user equipment between base stations. Accordingly, it is desired to provide an improved technique for controlling handover.

### SUMMARY

According to a first aspect, there is provided a method of identifying neighbouring base stations, as claimed in claim 1.

The first aspect recognises that a problem with base station deployment is that a serving base station may not be aware of all other neighbouring base stations, which can lead to poor service to user equipment since a candidate handover target may not be identified to which user equipment can be handed over to when the user equipment begins to move out of the coverage area provided by the serving base station. Whilst it may be possible to attempt to provision neighbour lists to all base stations as they are deployed, such an approach may not be practical or even possible in many circumstances. The provisioning of neighbour lists may prove sub-optimal if obstructions or interference prevents the transmissions from those apparently neighbouring base stations being receivable within the cell of the serving base station. Also, whilst functionality can be provided within base stations to enable those base stations to sense the presence of neighbouring base stations, this sensing takes place at the location of the base station and may provide an incomplete indication of neighbouring base stations, since there may be neighbours present which can be sensed elsewhere within the cell being supported by the base station but which may not be possible to sense at the base station located at the centre of that cell. These difficulties may lead to an available neighbouring base station to hand over to not being identified as a potential handover candidate, which can lead to handover failure.

Accordingly, a method of identifying base stations is provided. A number of base station neighbour lists may be maintained. Each of the base station neighbour lists may be associated with one of a number of base stations. Each base station neighbour list may have entries. Each entry may identify a neighbouring base station. The entry may have a base station identifier and at least one base station characteristic.

Accordingly, it can be seen that a number of base station neighbour lists can together provide an indication of the neighbour relationships between different base stations. These base station neighbour lists may typically be generated by each base station employing functionality to sense or sniff the presence of other base stations in their vicinity. As each new neighbouring base station is sensed, an entry may be made in the list which includes the base station identifier and a base station characteristic which may be determined from measurements made by a base station.

It will be appreciated that the initial entries in each base station neighbour list may only contain those neighbours which may be sensed by each base station and so may not include all base stations which neighbour that base station.

Accordingly, should a base station receive an indication of detected base station characteristics, which may typically be provided in a measurement report from user equipment, and the detected base station can not be identified from entries in the current neighbour list because there is no match, then a query may be made to see whether it is possible to obtain the identity of the detected base station. Hence, the base station may query the identity of the detected base station and, on receipt of a detected base station characteristic provided by a querying base station, a set of base station neighbour lists may be determined. The set of base station neighbour lists may be those that are in some way identified as being associated with the querying base station. By identifying a set of base station neighbour lists which are associated with the querying base station neighbour list, the likelihood of identifying the correct base station from the detected base station characteristic is improved. In particular, the set of base station neighbour lists may be those which share at least one common base station identifier with the base station neighbour list of the querying base station. For example, if the querying base station neighbour list has three entries with base stations 1 to 3, then the set of base station neighbour lists will be those which have any one of base stations 1 to 3 as an entry. This is because if the querying base station neighbours base stations 1 to 3, then the detected base station may also neighbour one of base stations 1 to 3. Each entry in the set of base station neighbour lists may be examined to see if there is a match between the detected base station characteristics and the characteristics of any of the entries in the set of base station neighbour lists. If a match in base station characteristics occurs, then there is a high likelihood that the identified base station is the base station that has been detected. Accordingly, the base station identifier may be provided from the matching entry to the querying base station in order to identify the detected base station. In this way, a neighbouring base station can be identified which would otherwise not have been detected.

In other words a method identifying neighbouring base stations is provided, comprising the steps of: maintaining a plurality of base station neighbour lists, each base station neighbour list being associated with one of a plurality of base stations, each base station neighbour list having at least one entry identifying a neighbouring base station which neighbours the one of a plurality of base stations, each entry having a base station identifier and a base station characteristic; and on receipt of a detected base station characteristic provided by a querying one of the plurality of base stations, determining if the detected base station characteristic has a matching entry where the detected base station characteristic matches a base station characteristic of any entry in a set of the plurality of base station neighbour lists, the set of the plurality of base station neighbour lists being a number of the plurality of base station neighbour lists which share at least one common base station identifier with the base station neighbour list of the querying one of the plurality of base stations and, if so, providing the base station identifier from the matching entry to the querying one of the plurality of base stations.

In one example, the method comprises the step of: updating the base station neighbour list to add an entry having the base station identifier from the matching entry and the detected base station characteristic. Hence, a new entry may then be made in the base station neighbour list of the querying base station to include the identifier and characteristics of the detected base station. In this way, further base stations which are detected by user equipment within the cell of the querying base station may be added to improve the neighbour list. This helps to ensure that new base stations installed neighbouring existing base stations or base stations that previously could not be communicated with are added to neighbour lists.

In one example, the method comprises the step of: instructing user equipment to perform measurement report procedures using base station characteristics transmitted by a neighbouring base station from its base station neighbour list. Accordingly, the user equipment may be instructed to perform measurements using base station characteristics which are transmitted by a neighbouring base station. By causing the user equipment to attempt to detect transmissions made by base stations already identified as being neighbours of neighbouring base stations, the likelihood of detecting further neighbouring base stations is increased.

In one example, the method comprises the step of: removing an entry from a base station neighbour list when either no handover with a neighbouring base station identified by the entry has occurred for a predetermined period of time or a number of unsuccessful handovers with a neighbouring base station identified by said entry have occurred. Accordingly, should no handover occur with a base station identified in a neighbour list for a particular length of time or should a number of unsuccessful handovers occur with a neighbouring base station identified in a neighbour list then this may indicate that this base station is no longer a neighbour due to its removal, some network reconfiguration or the introduction of an obstruction or interference. Hence, rather than having an entry for a base station which it may not be possible to hand over to, the entry is instead deleted in order to prevent an ultimately unsuccessful handover attempt being made. Again, this helps to ensure that the neighbour list remains accurate and optimises the handover procedure as user equipment no longer needs to attempt to perform measurement reports for that base station

In one example, the method comprises the step of: instructing user equipment to perform measurement report procedures when the user equipment is designated to be released. By causing the user equipment to perform measurements when the user equipment is being released helps to minimise any disruption to active calls. Also, this helps to minimise any signalling overhead required to cause user equipment to attempt to sense the presence of other neighbouring base stations, since the user equipment in this state is already configured and has resources allocated to support such activity. This capability can therefore be exploited without causing any disruption.

In one example, the base station characteristic comprise at least one of a primary scrambling code, a transmission frequency, a Base Station Identity Code (BSIC) and a Physical Cell Identifier (PCI) of a cell supporting communication with user equipment. Hence, the base station characteristics may comprise those characteristics which may be reported in user equipment measurement reports.

In one example, the base station identifier comprises a unique cell identifier. It will be appreciated that each cell identifier is typically unique within a network.

In one example, when the step of determining determines a matching entry from more than one base station neighbour list within the set, the method comprises the step of providing the base station identifier for a matching entry of a base station neighbour list sharing a highest number of common base station identifiers. Accordingly, should more than one neighbour list have a matching entry, then, if there is any difference in cell identifier of the matching entries, the neighbour list which has the highest number of base station identifiers in common with the querying base station neighbour list may be selected. In this way, the most likely base station may be identified.

In one example, the base station characteristic comprises an indication of signal strength and when the step of determining determines a matching entry from more than one base station neighbour list within the set, providing the base station identifier for a matching entry of a base station neighbour list having a highest signal strength. Accordingly, where more than one neighbour list has a matching entry then the neighbour list whose matching entry has the strongest signal strength may be selected.

According to a second aspect, there is provided a network node operable to identify neighbouring base stations, the network node comprising: neighbour list logic operable to maintain a plurality of base station neighbour lists, each base station neighbour list being associated with one of a plurality of base stations, each base station neighbour list having at least one entry identifying a neighbouring base station which neighbours the one of a plurality of base stations, each entry having a base station identifier and a base station characteristic; determining logic operable on receipt of a detected base station characteristic provided by a querying one of the plurality of base stations, to determine a set of the plurality of base station neighbour lists which share at least one common base station identifier with the base station neighbour list of the querying one of the plurality of base stations; and establishing logic operable to establish whether the detected base station characteristic has a matching entry which matches a base station characteristic of any entry in the set of the plurality of base station neighbour lists and, if so, to provide the base station identifier from the matching entry to the querying one of the plurality of base stations.

In one example, the network node comprises: updating logic operable to update the base station neighbour list to add an entry having the base station identifier from the matching entry and the detected base station characteristic.

In one example, the network node comprises: instructing logic operable to instruct user equipment to perform measurement report procedures using base station characteristics transmitted by a neighbouring base station from its base station neighbour list.

In one example, the network node comprises: removal logic operable to remove an entry from a base station neighbour list either when no handover with a neighbouring base station identified by the entry has occurred for a predetermined period of time or when a number of unsuccessful handovers with a neighbouring base station identified by said entry have occurred.

In one example, the network node comprises: instructing logic operable to instruct user equipment to perform measurement report procedures when the user equipment is designated to be released.

In one example, the base station characteristic comprise at least one of a primary scrambling code, a transmission frequency, a Base Station Identity Code (BSIC) and a Physical Cell Identifier (PCI) of a cell supporting communication with user equipment.

In one example, the base station identifier comprises a unique cell identifier.

In one example, the establishing logic is operable, when a matching entry from more than one base station neighbour list within the set is determined, to provide the base station identifier for a matching entry of a base station neighbour list sharing a highest number of common base station identifiers.

In one example, the base station characteristic comprises an indication of signal strength and the establishing logic is operable, when a matching entry from more than one base station neighbour list within the set is determined, to provide the base station identifier for a matching entry of a base station neighbour list having a highest signal strength.

In one example, the network node comprises one of a base station, a gateway and a radio network controller.

In one example, each base station neighbour list is associated with one of a plurality of small cell base stations, each base station neighbour list having at least one entry identifying a neighbouring macro base station which neighbours the one of a plurality of base stations.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a wireless telecommunications network according to one embodiment;
Figure 2 illustrates a general femto cell deployment within one macro cell shown in
Figure 1;

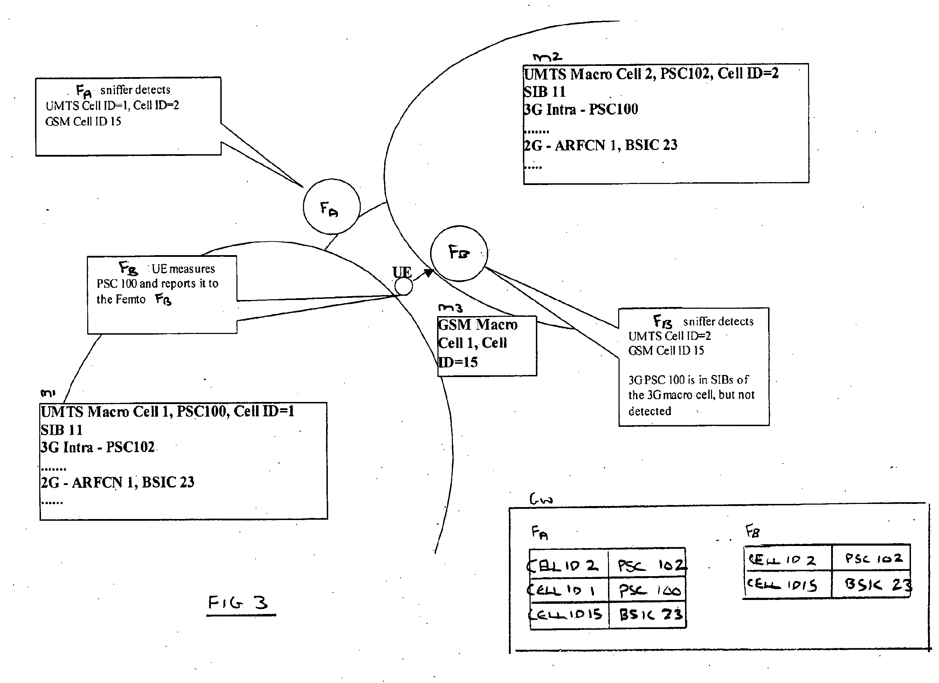

Figure 3 shows an illustrative deployment;

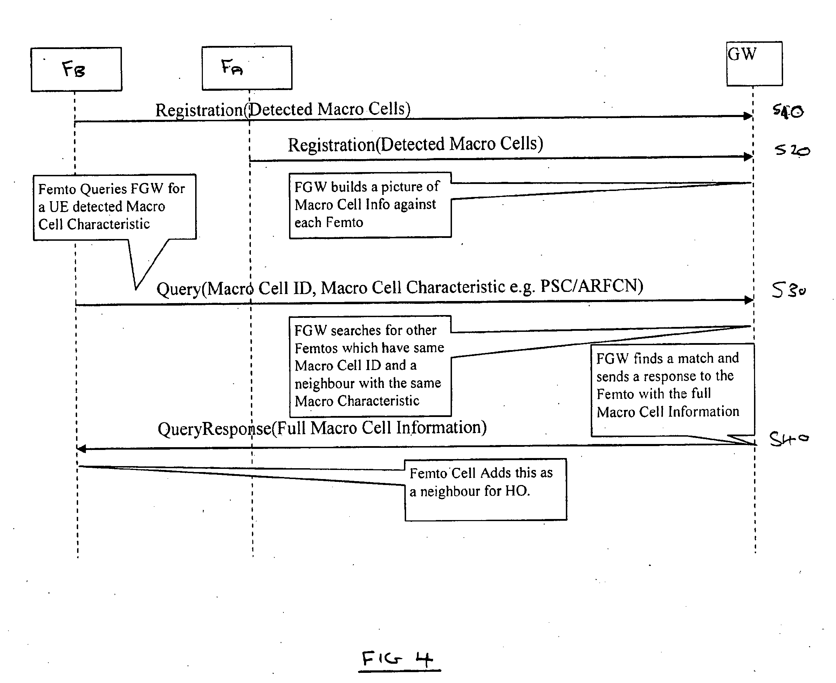

Figure 4 shows example message interactions between femto base stations and a femto gateway; and

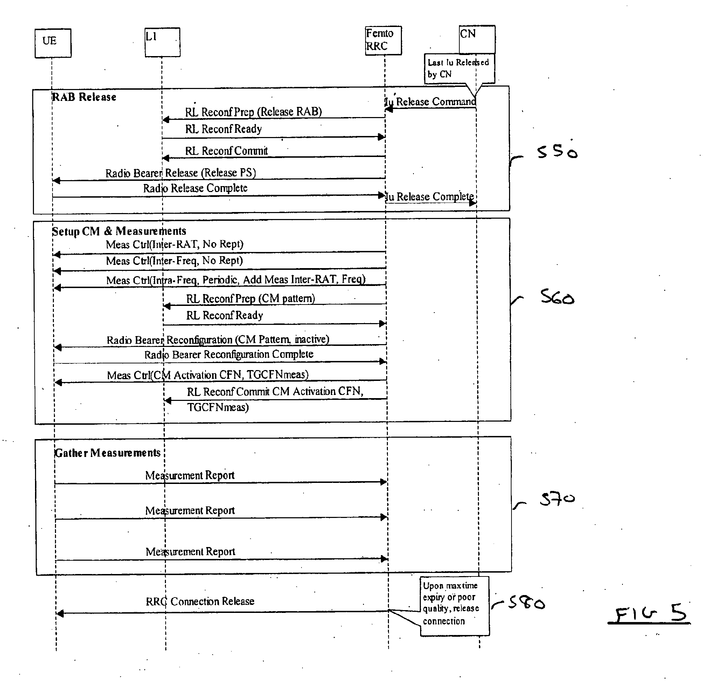

Figure 5 illustrates how user equipment may be utilised to detect potential neighbours.

### DESCRIPTION OF THE EMBODIMENTS

### Dep4ovment Overview

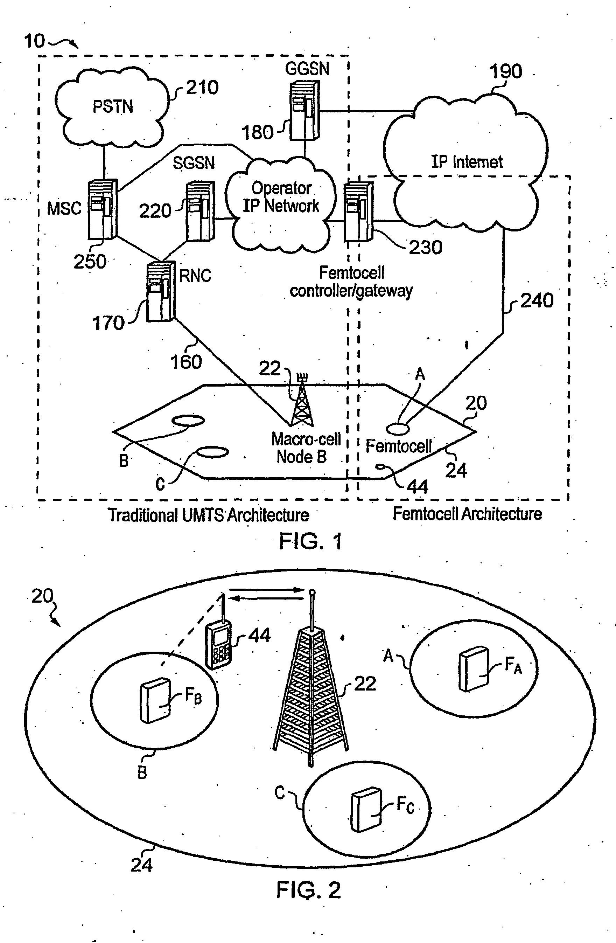

Figure 1 illustrates a wireless communication system, generally 10, according to one embodiment. User equipment 44 roam through the wireless communication system 10. Base stations 22 are provided which support respective macro cells 24. A number of such base stations are provided, which are distributed geographically in order to provide a wide area of coverage to the user equipment 44. When user equipment 44 is within a macro cell 24 supported by the base station 22 then communications may be established between the user equipment 44 and the base station 22 over an associated radio link. Each base station typically supports a number of sectors. Typically, a different antenna within a base station supports an associated sector. Of course, it will be appreciated that Figure 1 illustrates a small subset of the total number of user equipment and base stations that may be present in a typical communications system.

The wireless communication system 10 is managed by a radio network controller (RNC) 170. The radio network controller 170 controls the operation of the wireless communications system 10 by communicating with the base stations 22 over a backhaul communications link 160. The network controller 170 also communicates with the user equipment 44 via their respective radio links in order to efficiently manage the wireless communication system 10.

The radio network controller 170 maintains a neighbour list which includes information about the geographical relationship between cells supported by base stations and the radio network controller 170 broadcasts a representation of base station neighbours using a system information broadcast channel. In addition, the radio network controller 170 maintains location information which provides information on the location of the user equipment within the wireless communications system 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the radio network controller 170 communicates with service general packet radio service support nodes (SGSNs) 220 and a gateway general packet radio support node (GGSN) 180. The GGSN then communicates with a packet-switch core 190 such as, for example, the Internet.

As shown in more detail in Figure 2, there are provided small cell base stations, in this example femto cell base stations F_{A} to F_{C}, each of which provides a femto cell A to C in the vicinity of a building within which the associated femto cell base station is installed. The femto cells A to C provide local communications coverage for a user in the vicinity of those buildings. Each femto cell base station Fn to Fc communicates via a femtocell controller/gateway 230. The femtocell controller/gateway 230 maintains a neighbour list which includes information about the geographical relationship between cells supported by base stations. A mobility event such as a handover or camping event occurs between the base station 22 and the femto cell base stations F_{A} to F_{C} when the femto base stations F_{A} to F_{C} come within range. The femto cell base stations F_{A} to F_{C} typically utilise the user's broadband Internet connection 240 (such as ADSL, Cable, Ethernet, etc.) as a backhaul.

Femto cell base stations F_{A} to F_{C} are lower-power, low-cost, user-deployed base stations that provide a high cellular quality of service in residential or enterprise environment. In contrast to current macro cell approaches where complex and highly reliable base stations are deployed to strategic locations decided by the network owner, the femto cell base stations F_{A} to Fc are provided locally by customers or can be managed by the operator to augment their coverage for public users. Such femto cell base stations F_{A} to Fc provide local coverage in areas of the macro network where quality of service may be low. Hence, the femto cell base stations F_{A} to F_{C} provide for improved quality of service in areas which are difficult for network operators.

To reduce the cost of the femto base stations F_{A} to F_{C} and to reduce complexity and interference effects of the femto cell on other user equipment within the macro cell, the transmission power of the femto cell base station F_{A} to Fc is relatively low in order to restrict the size of the femto cell to a range of tens of metres or less. The femto cell base stations Fn to Fc have extensive auto-configuration and self-optimisation capability to enable a simply plug-and-play deployment. As such, they are designed to automatically integrate themselves into an existing macro cellular wireless network 10.

The femto cells are normally grouped into clusters and each femto cell cluster behaves like a single RNC when communicating with an SGSN in an existing packet switch core network or when communication with a MSC in an existing circuit switched core network. However, given that the RNC functionality is geographically dispersed across a large number of network elements, it is necessary to deploy a femto gateway for each cluster of femto cells. This femto gateway terminates the signalling interfaces between the traditional core network elements and the femto cell cluster, thereby creating the notion of a single virtual RNC. This virtual RNC represents the femto cell cluster as a whole. The femto gateway supports a number of procedures that are implemented on the femto base stations themselves.

Although the techniques mentioned herein have utility in any user equipment and base station arrangement, these techniques are particularly beneficial in a femto or small cell deployment where the network operator has less control over the deployment and configuration of such small cells.

### Operation Overview

Before discussing the embodiments in any more detail, a general overview will now be provided. As mentioned above, it is desirable for the network to be self-organizing, requiring little or no operator involvement in its configuration. One important feature of such self-organization is the ability to detect other base stations such as, for example, the neighbouring macro or femto base stations, since detection of these base stations may be required to enable mobility events to occur between femto base stations and the macro network. In order to be able to perform a mobility event such as handover, a base station requires full knowledge of the target base station's cell identifier (ID), as well as cell characteristics. In the case of a 2G network this requires the cell ID and the characteristics include the frequency and the Base Station Identity Code (BSIC). For a 3G network this requires the cell ID and the characteristics include the frequency and the primary scrambling code (PSC). For an LTE network this requires the Physical Cell Identifier (PCI) and the characteristics include the frequency. As mentioned above, this information may be detectable by a base station itself when operating in a sniffing or network listening mode. When in this mode, the base station receives the transmissions of the other base stations and decodes its characteristics. By using those characteristics and decoding the broadcast channel it is possible to determine the full cell ID of the base station as well as any other parameters which are necessary to support handover and this information can be placed into a neighbour list for subsequent use. However, as mentioned above, the listening or sniffing is performed at one specific location and user equipment can be at other locations within the cell. Also, it will be appreciated that handover is generally triggered when user equipment reaches the edge of coverage of a base station. At this position there is a reasonable possibility that there is another cell being supported by another base station which the serving or supporting base station cannot detect. Also, although currently deployed user equipment is capable of reporting the characteristics of detected base stations in measurement reports, currently such measurement reports do not provide the full cell ID which is needed to effect a successful handover. Accordingly, existing user equipment is incapable of providing all the information needed to add a detected candidate neighbour to the neighbour list of the serving base station and an incomplete or inaccurate neighbour list can lead to a poor handover success rate or possibly not even being able to execute a possible handover at all.

The present technique seeks to improve this situation by using user equipment measurement reports, and correlating these with base station neighbour lists of neighbouring base stations to help identify a cell ID of a likely base station detected by user equipment which the supporting base station was unable to detect and decode itself. This approach recognises that one or more base stations receiving measurement reports relating to the same cell ID will be generally located close to each other and may share a group of identical neighbours which may be unambiguously identified by cell characteristics. Hence, should a measurement report indicate a detected base station which is not currently in the serving base station's neighbour list then neighbour lists of neighbouring base stations may be examined to see whether the detected characteristics match any of their entries in order to determine the cell ID of the detected base station.

Because some of the characteristics may be shared by base stations within the network (that is that some of the characteristics may be repeated within the network), the likelihood of identifying the correct base station is improved by examining only the neighbour lists of neighbouring base stations. The neighbour lists of the neighbouring base stations may be identified by determining those neighbour lists which share entries with the neighbour list of the querying base station. Those neighbour lists that share entries are likely to be located in the vicinity of each other.

Also, this approach recognises that cell broadcasts may broadcast neighbouring macro cell characteristics on a system information broadcast (SIB 11 ) channel. Because some base stations, such as femto base stations, provide cell coverage which is smaller than that of, for example, a neighbouring macro base station, the neighbours of that femto base station may be a sub-set of the neighbours for the overlying macro base station. It is therefore possible to correlate information between base stations to enable them to determine the cell ID of a detected base station from the user equipment reported base station characteristics, even when individual base stations have not been able to directly determine the cell ID themselves by sniffing or network listening. Hence, the base stations can share information by using, for example, a centralized controller such as the femtocell controller/gateway 230, another network node or the RNC 170 to build up a mapping between base station characteristics and cell ID which can be utilised to determine the cell ID of a detected base station.

Figures 3 and 4 illustrate this approach in more detail. Figure 3 shows an illustrative deployment, whilst Figure 4 shows example message interactions between femto base stations and a femto gateway.

### Example Deployment

As shown in Figure 3, there are provided three macro base stations M 1 to M3 (which are similar to macro base station 22 mentioned above) and two femto base stations F_{A} and F_{B}. It will be appreciated that this example illustrates just a small sub-set of a typical deployment and that many more macro base stations and femto base stations will be provided in a typical deployment.

The first macro base station M1 supports a Universal Mobile Telecommunications System (UMTS) macro cell 1, having cell ID=1 and PSC 100. The second macro base station M2 supports UMTS macro cell 2, having cell ID=2 and PSC 102. Between UMTS macro cell 1 and UMTS macro cell 2 is provided the third macro base station M3 supporting Global System for Mobile Communications (GSM) macro cell 1 with cell ID 15, absolute radiofrequency channel number (ARFCN) 1 and BSIC 23.

### Neighbour Information Transmissions

Macro base stations Ml and M2 provide neighbour characteristic information which is transmitted on SIB 11. Accordingly, macro base station M1 transmits on SIB 11 base station characteristic information relating to macro base stations M2 and M3. In particular, macro base station M1 transmits on SIB 11 "3G INTRA-PSC 102". Macro base station M 1 also transmits on SIB 11 "2G-ARFCN 1, BSIC 23". Likewise, macro base station M2 transmits base station characteristic information relating to its neighbours on SIB 1 1. In particular, macro base station M2 transmits on SIB 11 3G INTRA-PSC 100. Macro base station M2 also transmits on SIB 11 2G-ARFCN l, BSIC 23. However, it will be appreciated that SIB 11 fails to transmit the cell-ID and so this information alone is insufficient to facilitate a handover.

### Initial Neighbour Detection

As shown in Figure 4, at step S10, through network listening femto base station F_{B}, detects macro base station M2 and macro base station M3. In particular, femto base station F_{B} identifies base station characteristics (a PSC and frequency for 3G base stations and frequency and BSIC for 2G base stations). Femto base station F_{B} also decode the cell ID of the detected macro base stations by decoding this from its broadcast channel. Femto base station F_{B} then registers this information with a network node such as the femto gateway/controller 230. The femto gateway/controller 230 then stores this information in a neighbour list database. For example, as shown in Figure 3, the femto gateway/controller 230 will store a table which represents a neighbour list for each of the femto base stations. The table has an entry for each detected neighbouring base station. Each entry may have the cell ID of the base station together with base station characteristics, such as, in this example, the PSC, BSIC, together with any frequency information.

Likewise, at step S20, femto base station F_{A} determines all neighbours that it can detect through sniffing and provides this information to the femto gateway/controller 230 for storage in an associated neighbour list.

This procedure continues until each deployed femto base station has identified all base stations which it is able to detect itself and provides this information to the femto gateway/controller 230 which compiles neighbour lists. It will be appreciated that many more neighbour lists will be maintained by the femto gateway/controller 230 than that shown in Figure 3.

### User Equipment Facilitated Neighbour Detection

Meanwhile, each femto base station will attempt to decode the SIB 11 (typically from the strongest 3G macro cell) and identifies any potentially missing neighbours from those characteristics. For example, assume that the strongest 3G macro cell for femto base station F_{A} is macro base station Ml. The base station characteristics provided by SIB 11 for macro base station M1 are PSC 102 and ARFCN 1, BSIC 23. However, femto base station F_{A} has already identified both of these neighbours and they are already stored in the neighbour list maintained by femto gateway/controller 230.

The strongest 3G macro cell for femto base station F_{B} is supported by macro base station M2. From decoding the SIB 1 1 for macro base station M2, femto base station F_{B} identifies that PSC 100 is not present in its neighbour list. Accordingly, femto base station F_{B} will instruct user equipment being supported to perform inter-frequency and inter-Radio Access Technology (RAT) measurements for PSC 100, typically when user equipment is identified as becoming idle, as shown in Figure 5.

It will be appreciated that femto base station F_{B} need not necessarily instruct user equipment to look for base stations having those characteristics identified by the SIB 11 I and instead may rely on the user equipment exhaustively detecting this base station. However, by providing this information to the user equipment the likelihood of the user equipment detecting the base station is improved.

In this example, the user equipment identifies a transmission of a base station using PSC 100 and reports this to femto base station F_{B} in a measurement report. The information contained in the measurement report is insufficient on its own to facilitate a handover since the measurement report also does not include the cell-ID.

Femto base station F_{B} reviews its neighbour list and identifies that a base station having PSC 100 is not present in any entries of its neighbour list.

Accordingly, at step 530, femto base station F_{B} sends a query to the femto gateway/controller 230 if the measurement report indicates that the quality of the signal received from the detected base station is suitable for handover. Femto base station F_{B} provides the measured base station characteristic (in this case the frequency and PSC) to the femto gateway/controller 230.

The femto gateway/controller 230 searches its database to find a match. The femto gateway/controller 230 looks for a group or set of neighbour lists which share a common detected cell ID. Within that group or set of neighbour lists the femto gateway/controller 230 attempts to match the queried characteristic to one of the entries in those neighbour lists. In this example, the femto gateway/controller 230 determines whether there are any other neighbour lists which include either cell ID 2 or cell ID 15. The femto gateway/controller 230 identifies that neighbour list of femto F_{A} includes both cell ID 2 and cell ID 15, and so adds this to the set of neighbour lists to be searched. It will be appreciated that in typical deployments more than one neighbour list may share at least one of the cell IDs present in the neighbour list of the querying base station.

From the neighbour list of femto F_{A} it can be seen that PSC 100 is present and is associated with cell ID 1; this entry is associated macro base station M 1.

Accordingly, at step S40, the femto gateway/controller 230 passes the cell ID to femto F_{B} which then updates its neighbour list. Likewise, the femto gateway/controller 230 will typically also add a further entry to the neighbour list for femto F_{B} which includes the detected characteristics and determined cell ID for macro base station Ml .

Hence, femto F_{B} can now utilise base station M1 as a potential handover target despite the fact that this base station was unable to be detected by femto F_{B}, that the cell ID is not transmitted on SIB 1 l, and that the UE that detected base station Ml did not provide its cell ID in its measurement report. Accordingly, femto F_{B} now has all the necessary information to include macro base station Ml as a neighbour and to perform outgoing or incoming handover.

It will be appreciated that although the embodiment illustrated provides additional functionality in the femto gateway 230, this functionality could instead be provided in another network node or even in the RNC 160.

Also, it will be appreciated that where more than one entry is identified by neighbour lists in the femto gateway/controller 230 which conflict, various different resolution schemes may be utilised in order to identify the most likely base station. For example, the most common entry may be selected, the entry from the neighbour list having the most number of entries in common with the neighbour list of the querying base station may be selected, or the entry having the strongest signal strength may be selected. Alternatively, if there are conflicting entries then information associated with either all or none of those entries may be provided to the querying base station.

### Neighbour List Maintenance

Either or both the femto base stations and the gateway may maintain a timer associated with each entry in their respective neighbour lists. Should that timer expire with no successful handover having occurred with a base station associated with that entry, then the entry may be deleted from the neighbour lists in the femto base station and the femto gateway/controller 230. This helps to ensure that any base station which may have been removed, may be inoperable, may have reduced transmission power, or may be suffering from attenuation due to an obstruction or interference which may render that base station to no longer be a handover candidate is removed from the neighbour list. Of course, should user equipment then subsequently detect this as a likely handover candidate then the base station may be re-included in the neighbour list.

### Dormant User Equipment Neighbour Detection

Figure 5 illustrates how user equipment may be utilised to detect potential neighbours. As shown generally at step S50, the user equipment has been identified to be released. Typically, this may occur at the end of an active call or when no active data transmissions are occurring.

Hence, generally at step S60, the user equipment is provided with base station characteristics obtained from SIB 11. Alternatively, the user equipment may be informed to perform measurements with some other characteristics.

Generally at step S70, the user equipment performs these measurements and provides measurement reports to the serving femto base station.

At step S80, the user equipment is finally released.

Hence, it can be seen that measurement reports can be performed at a time which is convenient to the femto base station and which does not interrupt the operation of user equipment. Instead, user equipment when becoming idle can be utilised for a period of time in order to perform these measurements.

Through this approach it can be seen that user equipment measurement reports may be used and correlated with base station neighbour lists of neighbouring base stations to help identify a cell ID of a likely neighbouring base station detected by user equipment which a serving base station was unable to detect and decode itself. This approach helps to build more accurate neighbour lists and helps to improve handover.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of identifying neighbouring base stations (m1 - m3), said method comprising the steps of:
maintaining (S10, S20) a plurality of base station neighbour lists, each base station neighbour list being associated with one of a plurality of base stations, each base station neighbour list having at least one entry identifying a neighbouring base station which neighbours said one of a plurality of base stations, each entry having a base station identifier and a base station characteristic; and
on receipt of a detected base station characteristic provided by a querying one of said plurality of base stations, determining (S30) a set of said plurality of base station neighbour lists which share at least one common base station identifier with said base station neighbour list of said querying one of said plurality of base stations, establishing whether said detected base station characteristic has a matching entry which matches a base station characteristic of any entry in said set of said plurality of base station neighbour lists and, if so, providing (S40) said base station identifier from said matching entry to said querying one of said plurality of base stations.

2. The method of claim 1, comprising the step of:
updating said base station neighbour list to add an entry having said base station identifier from said matching entry and said detected base station characteristic.

3. The method of claim 1 or 2, comprising the step of:
instructing user equipment (44) to perform measurement report procedures using base station characteristics transmitted by a neighbouring base station from its base station neighbour list.

4. The method of any preceding claim, comprising the step of:
removing an entry from a base station neighbour list when at least one of no handover with a neighbouring base station identified by said entry has occurred for a predetermined period of time and a number of unsuccessful handovers with a neighbouring base station identified by said entry have occurred.

5. The method of any preceding claim, comprising the step of:
instructing user equipment to perform measurement report procedures when said user equipment is designated to be released.

6. The method of any preceding claim, wherein said base station characteristic comprise at least one of a primary scrambling code, a transmission frequency, a Base Station Identity Code and a Physical Cell identifier of a cell supporting communication with user equipment.

7. The method of any preceding claim, wherein said base station identifier comprises a unique cell identifier.

8. The method of any preceding claim, wherein when said step of determining determines a matching entry from more than one base station neighbour list within said set, providing said base station identifier for a matching entry of a base station neighbour list sharing a highest number of common base station identifiers.

9. The method of any one of claims 1 to 7, wherein said base station characteristic comprises an indication of signal strength and when said step of determining determines a matching entry from more than one base station neighbour list within said set, providing said base station identifier for a matching entry of a base station neighbour list having a highest signal strength.

10. A network node (230) operable to identify neighbouring base stations (m 1 - m3), said network node comprising:
neighbour list logic operable to maintain a plurality of base station neighbour lists, each base station neighbour list being associated with one of a plurality of base stations, each base station neighbour list having at least one entry identifying a neighbouring base station which neighbours said one of a plurality of base stations, each entry having a base station identifier and a base station characteristic;
determining logic operable on receipt of a detected base station characteristic provided by a querying one of said plurality of base stations, to determine a set of said plurality of base station neighbour lists which share at least one common base station identifier with said base station neighbour list of said querying one of said plurality of base stations; and
establishing logic operable to establish whether said detected base station characteristic has a matching entry which matches a base station characteristic of any entry in said set of said plurality of base station neighbour lists and, if so, to provide said base station identifier from said matching entry to said querying one of said plurality of base stations.

11. The network node of claim 10, comprising:
updating logic operable to update said base station neighbour list to add an entry having said base station identifier from said matching entry and said detected base station characteristic.

12. The network node of claim 10 or 11, comprising:
instructing logic operable to instruct user equipment (44) to perform measurement report procedures using base station characteristics transmitted by a neighbouring base station from its base station neighbour list.

13. The network node any one of claims 10 to 12, comprising:
removal logic operable to remove an entry from a base station neighbour list when at least one of no handover with a neighbouring base station identified by said entry has occurred for a predetermined period of time and a number of unsuccessful handovers with a neighbouring base station identified by said entry have occurred.

14. The network node of any one of claims 10 to 13, comprising:
instructing logic operable to instruct user equipment to perform measurement report procedures when said user equipment is designated to be released.

15. A computer program product operable, when executed on a computer, to perform the method steps of any one of claims 1 to 9.

## Patentansprüche

1. Verfahren zur Identifizierung benachbarter Basisstationen (m1 - m3), wobei das besagte Verfahren die folgenden Schritte umfasst:
Führen (S10, S20) einer Vielzahl von Nachbarbasisstationslisten, wobei jede Nachbarbasisstationsliste mit einer einer Vielzahl von Basisstationen assoziiert ist, wobei jede Nachbarbasisstationsliste mindestens einen Eintrag aufweist, welcher eine benachbarte Basisstation, die mit der besagten einen einer Vielzahl von Basisstationen benachbart ist, identifiziert, wobei jeder Eintrag eine Basisstationskennung und eine Basisstationseigenschaft umfasst; und
nach Empfang einer von einer abfragenden der besagten Vielzahl von Basisstationen bereitgestellten erkannten Basisstationseigenschaft, Ermitteln (S30) eines Satzes der besagten Vielzahl von Nachbarbasisstationslisten, welche mindestens eine gemeinsame Basisstationskennung mit der besagten Nachbarbasisstationsliste der besagten abfragenden der besagten Vielzahl von Basisstationen teilen, Feststellen, ob die besagte erkannte Basisstationseigenschaft einen mit einer Basisstationseigenschaft eines beliebigen Eintrags in dem besagten Satz der besagten Vielzahl von Nachbarbasisstationslisten übereinstimmenden Eintrag hat, und, wenn dies der Fall ist, Bereitstellen (S40) der besagten Basisstationskennung aus dem besagten übereinstimmenden Eintrag an die abfragende der besagten Vielzahl von Basisstationen.

2. Verfahren nach Anspruch 1, den folgenden Schritt umfassend:
Aktualisieren der besagten Nachbarbasisstationsliste, um einen Eintrag mit der besagten Basisstationskennung aus dem besagten übereinstimmenden Eintrag und der besagten erkannten Basisstationseigenschaft hinzuzufügen.

3. Verfahren nach Anspruch 1 oder 2, den folgenden Schritt umfassend:
Anweisen des Benutzerendgeräts (44), um Messberichtsprozeduren unter Verwendung der von einer benachbarten Basisstation aus ihrer Nachbarbasisstationsliste übertragenen Basisstationseigenschaften durchzuführen.

4. Verfahren nach einem beliebigen der vorstehenden Ansprüche, den folgenden Schritt umfassend:
Entfernen eines Eintrags aus einer Nachbarbasisstationsliste, wenn mindestens entweder kein Handover mit einer durch den besagten Eintrag identifizierten benachbarten Basisstation über einen vorbestimmten Zeitraum hinweg erfolgt ist oder mehrere erfolglose Handovers mit einer durch den besagten Eintrag identifizierten benachbarten Basisstation vorgenommen wurden.

5. Verfahren nach einem beliebigen der vorstehenden Ansprüche, den folgenden Schritt umfassend:
Anweisen des Benutzerendgeräts, um Messberichtsprozeduren durchzuführen, wenn das besagte Benutzerendgerät als freizugeben bestimmt wird.

6. Verfahren nach einem beliebigen der vorstehenden Ansprüche, wobei die besagte Basisstationseigenschaft mindestens eine der folgenden Eigenschaften einschließt: einen primären Verwürfelungscode, eine Sendefrequenz, einen Basisstationsidentitätscode und eine physische Zellkennung einer Zelle, welche die Kommunikation mit dem Benutzerendgerät unterstützt.

7. Verfahren nach einem beliebigen der vorstehenden Ansprüche, wobei die Basisstationskennung eine eindeutige Zellkennung einschließt.

8. Verfahren nach einem beliebigen der vorstehenden Ansprüche, wobei der besagte Schritt des Ermittelns einen übereinstimmenden Eintrag aus mehr als einer Nachbarbasisstationsliste innerhalb des besagten Satzes ermittelt, welcher die besagte Basisstationskennung für einen übereinstimmenden Eintrag einer Basisstationsnachbarliste bereitstellt, die die größte Anzahl von gemeinsamen Basisstationskennungen teilt.

9. Verfahren nach einem beliebigen der Ansprüche 1 bis 7, wobei die besagte Basisstationseigenschaft eine Signalstärke einschließt, und, wenn der besagte Schritt des Ermittelns einen übereinstimmenden Eintrag aus mehr als einer Nachbarbasisstationsliste innerhalb des besagten Satzes ermittelt, Bereitstellen der besagten Basisstationskennung für einen übereinstimmenden Eintrag einer Nachbarbasisstationsliste mit einer größten Signalstärke.

10. Netzwerkknoten (230), betreibbar für das Identifizieren benachbarter Basisstationen (m1 - m3), wobei der besagte Netzwerkknoten umfasst:
Nachbarlistenlogik, betreibbar für das Führen einer Vielzahl von Nachbarbasisstationslisten, wobei jede Nachbarbasisstationsliste mit einer einer Vielzahl von Basisstationen assoziiert ist, wobei jede Nachbarbasisstationsliste mindestens einen Eintrag aufweist, welcher eine benachbarte Basisstation, die mit der besagten einen einer Vielzahl von Basisstationen benachbart ist, identifiziert, wobei jeder Eintrag eine Basisstationskennung und eine Basisstationseigenschaft umfasst; und
Ermittlungslogik, betreibbar für das Ermitteln, nach Empfang einer von einer abfragenden der besagten Vielzahl von Basisstationen bereitgestellten erkannten Basisstationseigenschaft, eines Satzes der besagten Vielzahl von Nachbarbasisstationslisten, welche mindestens eine gemeinsame Basisstationskennung mit der besagten Nachbarbasisstationslisten der besagten abfragenden der besagten Vielzahl von Basisstationen teilen; und
Feststellungslogik, betreibbar für das Feststellen, ob die besagte erkannte Basisstationseigenschaft einen mit einer Basisstationseigenschaft eines beliebigen Eintrags in dem besagten Satz der besagten Vielzahl von Nachbarbasisstationslisten übereinstimmenden Eintrag hat, und, wenn dies der Fall ist, für das Bereitstellen der besagten Basisstationskennung aus dem besagten übereinstimmenden Eintrag an die abfragende der besagten Vielzahl von Basisstationen.

11. Netzwerkknoten nach Anspruch 10, umfassend:
Aktualisierungslogik, betreibbar für das Aktualisieren der besagten Nachbarbasisstationsliste, um einen Eintrag mit der besagten Basisstationskennung aus dem besagten übereinstimmenden Eintrag und der besagten erkannten Basisstationseigenschaft hinzuzufügen.

12. Netzwerkknoten nach Anspruch 10 oder 11, umfassend:
Anweisungslogik, betreibbar für das Anweisen des Benutzerendgeräts (44), um Messberichtsprozeduren unter Verwendung der von einer benachbarten Basisstation aus ihrer Nachbarbasisstationsliste übertragenen Basisstationseigenschaften durchzuführen.

13. Netzwerkknoten nach einem beliebigen der Ansprüche 10 bis 12, umfassend:
Entfernungslogik, betreibbar für das Entfernen eines Eintrags aus einer Nachbarbasisstationsliste, wenn mindestens entweder kein Handover mit einer durch den besagten Eintrag identifizierten benachbarten Basisstation über einen vorbestimmten Zeitraum hinweg erfolgt ist oder mehrere erfolglose Handovers mit einer durch den besagten Eintrag identifizierten benachbarten Basisstation vorgenommen wurden.

14. Netzwerkknoten nach einem beliebigen der Ansprüche 10 bis 13, umfassend:
Anweisungslogik, betreibbar für das Anweisen des Benutzerendgeräts, um Messberichtsprozeduren durchzuführen, wenn das besagte Benutzerendgerät als freizugeben bestimmt wird.

15. Computerprogramm-Produkt, betreibbar, um bei dessen Ausführung auf einem Computer die Verfahrensschritte eines beliebigen der Ansprüche 1 bis 9 durchzuführen.

## Revendications

1. Procédé d'identification de stations de base voisines (m1 à m3), ledit procédé comprenant les étapes suivantes :
tenir à jour (S10, S20) une pluralité de listes de stations de base voisines, chaque liste de stations de base voisine étant associée à une station de base parmi une pluralité de stations de base, chaque liste de stations de base voisine ayant au moins une entrée identifiant une station de base voisine qui est voisine de ladite station de base parmi une pluralité de stations de base, chaque entrée ayant un identifiant de station de base et une caractéristique de station de base ; et
à la réception d'une caractéristique de station de base détectée fournie par une interrogation d'une station de base parmi ladite pluralité de stations de base, déterminer (S30) un ensemble de ladite pluralité de listes de stations de base voisines qui partagent au moins un identifiant de station de base commun avec ladite liste de stations de base voisine de ladite interrogation d'une station de base parmi ladite pluralité de stations de base, établir si ladite caractéristique de station de base détectée a une entrée correspondante qui correspond à une caractéristique de station de base de n'importe quelle entrée dans ledit ensemble de ladite pluralité de listes de stations de base voisines et, si tel est le cas, fournir (S40) ledit identifiant de station de base de ladite entrée correspondante à ladite interrogation d'une station de base parmi ladite pluralité de stations de base.

2. Procédé selon la revendication 1, comprenant l'étape suivante :
mettre à jour ladite liste de stations de base voisine pour ajouter une entrée ayant ledit identifiant de station de base de ladite entrée correspondante et ladite caractéristique de station de base détectée.

3. Procédé selon la revendication 1 ou 2, comprenant l'étape suivante :
ordonner à l'équipement utilisateur (44) d'exécuter des procédures de rapport de mesure au moyen de caractéristiques de station de base transmises par une station de base voisine à partir de sa liste de stations de base voisine.

4. Procédé selon l'une quelconque des revendications précédentes, comprenant l'étape suivante :
supprimer une entrée d'une liste de stations de base voisine lorsqu'aucun transfert avec une station de base voisine identifiée par ladite entrée ne s'est produit pendant une période prédéterminée et/ou lorsque plusieurs transferts ayant échoué avec une station de base voisine identifiée par ladite entrée se sont produits.

5. Procédé selon l'une quelconque des revendications précédentes, comprenant l'étape suivante :
ordonner à l'équipement utilisateur d'exécuter des procédures de rapport de mesure lorsque ledit équipement utilisateur est désigné pour être libéré.

6. Procédé selon l'une quelconque des revendications précédentes, dans lequel ladite caractéristique de station de base comprend au moins un code de brouillage principal, une fréquence d'émission, un code d'identité de station de base et un identifiant de cellule physique d'une cellule prenant en charge la communication avec un équipement utilisateur.

7. Procédé selon l'une quelconque des revendications précédentes, dans lequel ledit identifiant de station de base comprend un identifiant de cellule unique.

8. Procédé selon l'une quelconque des revendications précédentes, dans lequel lorsque ladite étape de détermination détermine une entrée correspondante à partir de plus d'une liste de stations de base voisine dans ledit ensemble, fournissant ledit identifiant de station de base pour une entrée correspondante d'une liste de stations de base voisine partageant le nombre le plus élevé possible d'identifiants de station de base communs.

9. Procédé selon l'une quelconque des revendications 1 à 7, dans lequel ladite caractéristique de station de base comprend une indication d'intensité de signal et le moment où ladite étape de détermination détermine une entrée correspondante à partir de plus d'une liste de stations de base voisine dans ledit ensemble, fournissant ledit identifiant de station de base pour une entrée correspondante d'une liste de stations de base voisine présentant l'intensité de signal la plus élevée possible.

10. Noeud de réseau (230) permettant d'identifier des stations de base voisines (m1 à m3), ledit nceud de réseau comprenant :
une logique de liste voisine permettant de tenir à jour une pluralité de listes de stations de base voisines, chaque liste de stations de base voisine étant associée à une station de base parmi une pluralité de stations de base, chaque liste de stations de base voisine ayant au moins une entrée identifiant une station de base voisine qui est voisine de ladite station de base parmi une pluralité de stations de base, chaque entrée ayant un identifiant de station de base et une caractéristique de station de base ;
une logique de détermination permettant, à la réception d'une caractéristique de station de base détectée fournie par une interrogation d'une station de base parmi ladite pluralité de stations de base, de déterminer un ensemble de ladite pluralité de listes de stations de base voisines qui partagent au moins un identifiant de station de base commun avec ladite liste de stations de base voisine de ladite interrogation d'une station de base parmi ladite pluralité de stations de base ; et
une logique d'établissement permettant d'établir si ladite caractéristique de station de base détectée a une entrée correspondante qui correspond à une caractéristique de station de base de n'importe quelle entrée dans ledit ensemble de ladite pluralité de listes de stations de base voisines et, si tel est le cas, permettant de fournir ledit identifiant de station de base de ladite entrée correspondante à ladite interrogation d'une station de base parmi ladite pluralité de stations de base.

11. Noeud de réseau selon la revendication 10, comprenant :
une logique de mise à jour permettant de mettre à jour ladite liste de stations de base voisine pour ajouter une entrée ayant ledit identifiant de station de base de ladite entrée correspondante et ladite caractéristique de station de base détectée.

12. Noeud de réseau selon la revendication 10 ou 11, comprenant :
une logique d'ordre permettant d'ordonner à l'équipement utilisateur (44) d'exécuter des procédures de rapport de mesure au moyen de caractéristiques de station de base transmises par une station de base voisine à partir de sa liste de stations de base voisine.

13. Noeud de réseau selon l'une quelconque des revendications 10 à 12, comprenant :
une logique de suppression permettant de supprimer une entrée d'une liste de stations de base voisine lorsqu'aucun transfert avec une station de base voisine identifiée par ladite entrée ne s'est produit pendant une période prédéterminée et/ou lorsque plusieurs transferts ayant échoué avec une station de base voisine identifiée par ladite entrée se sont produits.

14. Noeud de réseau selon l'une quelconque des revendications 10 à 13, comprenant :
une logique d'ordre permettant d'ordonner à l'équipement utilisateur d'exécuter des procédures de rapport de mesure lorsque ledit équipement utilisateur est désigné pour être libéré.

15. Produit de programme informatique permettant, lorsqu'il est exécuté sur un ordinateur, d'exécuter les étapes du procédé selon l'une quelconque des revendications 1 à 9.
